(19) Europäisches Patentamt
European Patent Office
Office européen des brevets

(11) **EP 3 829 160 B1**

(12) **FASCICULE DE BREVET EUROPEEN**

(45) Date de publication et mention
de la délivrance du brevet:
**01.05.2024   Bulletin 2024/18**

(21) Numéro de dépôt: **20209006.4**

(22) Date de dépôt: **20.11.2020**

(51) Classification Internationale des Brevets (IPC):
**H04N 25/771** *(2023.01)*     **H04N 25/60** *(2023.01)*

(52) Classification Coopérative des Brevets (CPC):
**H04N 25/60; H04N 25/771**

(54) **PIXEL À PLAGE DYNAMIQUE AJUSTABLE POUR LA RÉDUCTION DE BRUIT**

PIXEL MIT EINSTELLBAREM DYNAMIKBEREICH ZUR GERÄUSCHREDUZIERUNG

PIXEL WITH ADJUSTABLE DYNAMIC RANGE FOR NOISE REDUCTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **29.11.2019   FR 1913436**

(43) Date de publication de la demande:
**02.06.2021   Bulletin 2021/22**

(73) Titulaire: **Pyxalis**
**38430 Moirans (FR)**

(72) Inventeur: **MICHELOT, Julien**
**38500 VOIRON (FR)**

(74) Mandataire: **Atout PI Laplace**
**Immeuble "Visium"**
**22, avenue Aristide Briand**
**94117 Arcueil Cedex (FR)**

(56) Documents cités:
**US-A1- 2011 303 846     US-A1- 2018 332 247
US-A1- 2019 238 768**

## Description

## Champ d'application

L'invention concerne les capteurs d'images basés sur une matrice de pixels actifs en technologie CMOS.

Ce type de capteurs met à profit les effets photoélectriques dans les matériaux semi-conducteurs pour convertir les photons reçus en des signaux électroniques permettant de reconstituer l'image captée. Il existe deux grandes familles de capteurs d'images : les capteurs à base de la technologie CCD (Charge - Coupled Device) et les capteurs basés sur la technologie CMOS (Complementary Metal-Oxide-Semiconductor).

Les capteurs CMOS offrent une intégration plus facile dans les circuits intégrés à grande échelle combinée avec un faible coût de fabrication par rapport aux capteurs CCD. Par ailleurs, ils permettent d'obtenir une vitesse de traitement plus élevée avec une consommation énergétique plus faible. Ce qui explique l'adoption de cette technologie pour les produits de marché de masse tels que la téléphonie mobile malgré la supériorité technique offerte par les capteurs CCD. Le contexte technologique et économique du domaine des capteurs d'images justifie l'intérêt du développement de solutions pour réduire le bruit dans les capteurs d'images basés sur une matrice de pixels actifs en technologie CMOS.

## Problème soulevé

Le principe de fonctionnement standard d'un pixel actif en technologie CMOS est présenté ci-dessous.

Généralement, et comme décrit sur la figure 1, les pixels actifs en technologie CMOS comportent un élément à effet photoélectrique D1 qui va générer des charges électriques suite à son exposition à un rayonnement électromagnétique pendant une durée déterminée. On parle ici de la phase d'intégration des charges. Une photodiode peut être utilisée pour implémenter cette fonction. Les charges générées sont transmises vers le noeud de détection FD via l'activation d'une grille de transfert Q1 connectée à la sortie de la photodiode D1. La capacité du noeud de détection FD (intrinsèque ou additionnelle) sert à convertir les charges transmises en une tension électrique. Un transistor de réinitialisation Q2 est connecté au noeud de détection de charge FD pour rétablir le potentiel du noeud à une valeur de référence VDD suite à une lecture. Le transistor Q2 est commandé par le signal de réinitialisation RST. Un transistor Q3 monté généralement en amplificateur drain commun (montage suiveur de tension) sert à adapter l'impédance vue par les charges transmises au noeud de détection FD, après une intégration des charges, et établir une tension à sa source représentant les charges stockées dans le noeud de détection FD. Cette sortie est commandée par un transistor de sélection de ligne Q4 commandé par le signal externe au pixel RS (Row Select) permettant la transmission du signal obtenu dans la colonne de la matrice de pixels correspondant au pixel en lecture.

Un capteur d'images basé sur ce type de pixel comprend les éléments suivants : une matrice de pixels agencés en lignes et colonnes ; un circuit de génération de signaux de commande propagés dans la matrice de pixel pour contrôler les différentes phases de lecture, intégration et réinitialisation ; un circuit d'alimentation pour alimenter chaque colonne de pixels de la matrice ; des circuits de lecture en bas de chaque colonne permettant d'échantillonner, pour chaque ligne de pixels adressée, les tensions présentes sur les colonnes. Les signaux échantillonnés sont ensuite convertis par un convertisseur analogique-numérique pour être post-traités.

Des nouvelles applications des capteurs d'images se développent telles que la vision industrielle, la robotique et les voitures autonomes. Ces applications demandent une performance supérieure des capteurs d'images à technologie CMOS pour des conditions de faible luminosité et / ou des cibles en mouvements. Ces nouvelles applications nécessitant en plus une imagerie à grande gamme dynamique (en anglais High Dynamic Range - HDR) qui traduit la capacité du capteur à intégrer un grand nombre de charges tout en présentant un faible bruit relativement aux techniques classiques.

Concernant le fonctionnement dans des conditions de faible luminosité, la réduction du bruit dans les imageurs est fondamentale. On constate pour les imageurs deux types de bruit : le bruit temporel et le bruit spatial fixe. Le bruit temporel couvre des signaux aléatoires dans le temps qui s'additionnent au signal de sortie du capteur. On rappelle en ce qui suit les différentes sources de bruit connues de l'Homme du métier dans le domaine des capteurs d'images CMOS.

*Le bruit thermique* est le bruit généré par l'agitation thermique des porteurs de charges dans les composants électroniques formant le circuit de chaque pixel. Le bruit kTC dans les pixels est le bruit thermique dépendant des caractéristiques résistives et capacitives des transistors reliés au noeud de détection du pixel.

*Le bruit de grenaille* est le bruit résultant de l'aspect quantique des photons incidents sur l'élément à effet photoélectrique.

*Le bruit de scintillement,* communément appelé bruit en 1/f ou bruit dit de « flicker » ou encore bruit de basse fréquence. Ce bruit est généré par les fluctuations de la mobilité dans le substrat due à la génération ou la recombinaison aléatoire de paires électron-trou.

*Le bruit spatial fixe* est la différence de réponses entre les pixels dans la même matrice sous une même illumination. Cela est dû à la variabilité technologique lors de la réalisation du circuit intégré.

Par ailleurs, les capteurs d'images à technologie CMOS peuvent être utilisés selon deux modes de fonctionnement différents. Un premier mode de fonctionnement est le mode en obturation déroulante, dit « rolling shutter » en anglais, pour lequel les phases d'intégration, de transfert des charges et de lecture sont décalées dans le temps d'une ligne à une autre. Un second mode de fonctionnement est le mode en obturation globale qui permet une capture des photons simultanée dans tous les pixels de la matrice. Ce mode de fonctionnement est plus adapté à des cibles en mouvement.

Ainsi, il existe un besoin pour réduire le bruit dans les pixels actifs formant les capteurs d'images à technologie CMOS fonctionnants à la fois en obturation globale et en obturation déroulante.

**Art antérieur/ Restrictions de l'état de l'art**

La demande de brevet américaine US20140239161 présente une architecture de pixels actifs compatible avec le fonctionnement en obturation globale. Le pixel décrit dans ce brevet est basé sur une lecture dans le domaine des tensions en opposition au domaine des charges. Cela permet de réduire uniquement le bruit kTC dans le capteur d'images sans réduire les autres composantes de bruit. Cette solution ne permet pas d'obtenir le rapport signal à bruit le plus optimal car elle ne tient pas compte des autres types de bruit générés dans un capteur d'images.

La demande de brevet EP3324612 présente un pixel actif dans lequel le substrat du transistor monté en drain commun est polarisé avec un potentiel de référence déterminé. Cependant, cette solution est principalement focalisée sur la réduction de bruit de *grenaille* en utilisant des transistors à oxyde épais dans la globalité du pixel.

La demande de brevet EP2966687 propose un pixel actif utilisant un transistor amplificateur monté en drain commun à oxyde fin pour réduire le bruit de scintillement. Une polarisation du substrat de ce transistor est proposée d'une façon semblable au montage décrit dans EP3324612. Cependant, la demande de brevet EP2966687 ne présente pas une solution compatible avec le fonctionnement en obturation globale dans le domaine des tensions. De plus, cette solution est spécifiquement développée pour les noeuds technologiques avancés. La demande de brevet nord-américaine US2019238768 A1 divulgue un pixel actif "integrate while read, IWR" dans lequel l'échantillonneur-bloqueur atténue la tension sur la grille du transistor amplificateur monté en drain commun. Néanmoins, cette atténuation est considérée comme un effet parasite et n'est pas réglable.

**Réponse au problème et apport solution**

Pour pallier les défauts des capteurs existants en ce qui concerne l'amélioration du rapport signal sur bruit dans les capteurs d'images à pixels actifs en réduisant le bruit de scintillement tout en restant compatible avec un fonctionnement en obturation globale dans le domaine des tensions, l'invention propose la solution suivante. La composante de bruit kTC est réduite grâce à une technique de double échantillonnage corrélé (CDS).

Concernant le bruit de scintillement, les modèles théoriques de McWhorter et de Hooge nous enseignent que la composante de bruit de scintillement à travers un transistor CMOS est inversement proportionnelle au carré de la capacité surfacique grille-substrat $C_{ox}$ formé par l'oxyde de sa grille.

Les modèles de McWhorter et de Hooge pour décrire le bruit de scintillement dans un substrat semi-conducteur sont détaillés dans le document « Lundberg, Kent H. "Noise Sources in Bulk CMOS».

Sachant que la capacité $C_{ox}$ est aussi inversement proportionnelle à l'épaisseur de l'oxyde utilisé pour fabriquer la grille, l'utilisation de transistor à oxyde fin dans l'étage d'amplification du pixel limitera le bruit de scintillement au niveau du noeud de détection. Les transistors à oxyde fin ne peuvent pas supporter des tensions qui dépassent un certain seuil. On parle ici de la tension de claquage qui est plus basse pour les transistors à oxyde fin que celle pour les transistors à oxyde épais. Ainsi il devient nécessaire d'adapter la plage de tension régissant le fonctionnement de l'étage de lecture de chaque pixel tout en gardant les oxydes épais dans les étages précédents pour assurer une dynamique suffisante par rapport à un pixel entièrement conçu avec des transistors à oxyde épais.

L'invention propose ainsi une solution basée sur l'intégration d'un atténuateur entre le noeud de détection et la grille du transistor d'amplification du pixel actif. Cet étage atténuateur permet l'adaptation de la plage de tensions sur cette grille de façon à pouvoir utiliser des transistors à oxyde fin dans l'étage de lecture de chaque pixel.

Cette solution permet un fonctionnement dans le domaine des tensions ce qui présente l'avantage de rester compatible d'un fonctionnement en obturation globale.

L'ensemble des caractéristiques techniques présentées ci-dessus permettent la conception d'un capteur d'images à pixels actifs offrant une meilleure réduction du bruit adapté à une utilisation dans des conditions de faible luminosité et / ou avec des cibles en mouvement. Avantageusement, l'architecture du pixel présenté permet la combinaison d'une large plage de tension à l'entrée et d'un faible bruit. Ainsi, le pixel décrit ci-dessous présente les caractéristiques d'un pixel d'imagerie à grande gamme dynamique (HDR).

**Résumé /Revendications**

L'invention a pour objet un pixel d'un capteur d'images, le pixel comprenant :

un élément à effet photoélectrique pour générer des charges électriques en réponse à une radiation électromagnétique incidente,
un noeud de détection primaire,
un noeud de détection secondaire,
une grille de transfert, connectée entre la sortie de l'élément à effet photoélectrique et le noeud de détection primaire, pour commander un transfert de charges électriques vers le noeud de détection primaire,

un atténuateur connecté entre le noeud de détection primaire et le noeud de détection secondaire ayant un facteur d'atténuation choisi pour convertir une première plage de tension en entrée en une seconde plage de tension en sortie, la seconde plage de tension étant plus réduite que la première plage de tension,

un premier commutateur de réinitialisation connecté au noeud de détection primaire pour réinitialiser le noeud de détection à une première tension d'alimentation choisie ; un second commutateur de réinitialisation connecté au noeud de détection secondaire pour réinitialiser le noeud de détection à une seconde tension d'alimentation choisie ;

un étage d'amplification comprenant un premier amplificateur comprenant un premier transistor à bas bruit disposant d'une grille connectée au noeud de détection secondaire,

un commutateur de sélection connecté à la sortie de l'étage d'amplification pour échantillonner le signal de sortie de l'étage d'amplification.

L'atténuateur du pixel comprend :

un premier élément capacitif réalisé entre le noeud de détection primaire et une masse électrique
un deuxième élément capacitif réalisé entre le noeud de détection secondaire et la masse électrique
un troisième élément capacitif réalisé entre le noeud de détection primaire et le noeud de détection secondaire.

Selon un aspect particulier de l'invention, le deuxième élément capacitif de l'atténuateur est réalisé par la capacité intrinsèque du noeud de détection secondaire par rapport à la masse électrique.

Selon un aspect particulier de l'invention, le troisième élément capacitif de l'atténuateur présente une capacité déterminée de sorte à respecter le facteur d'atténuation choisi.

Selon un aspect particulier de l'invention, le premier élément capacitif de l'atténuateur présente une capacité déterminée de sorte à respecter un facteur de conversion du pixel choisi.

Selon un aspect particulier de l'invention, l'élément à effet photoélectrique dans le pixel selon l'invention est une photodiode pincée.

Selon un aspect particulier de l'invention, la sortie du premier amplificateur dans le pixel est connectée à la sortie de l'étage d'amplification du pixel.

Selon un aspect particulier de l'invention, le premier amplificateur est un transistor PMOS ou NMOS avec une grille d'oxyde fin, monté en drain commun.

Selon un aspect particulier de l'invention, le premier amplificateur est un transistor natif, monté en drain commun.

Selon un aspect particulier de l'invention, l'étage d'amplification du pixel selon l'invention comprend :

un étage d'échantillonnage comprenant un commutateur d'échantillonnage pour échantillonner le signal de sortie du premier amplificateur et un élément capacitif d'échantillonnage pour stocker le signal échantillonné,
un second amplificateur ayant une entrée connectée à la sortie de l'étage d'échantillonnage et ayant une sortie connectée à la sortie de l'étage d'amplification.

Selon un aspect particulier de l'invention, le pixel comprend :

un commutateur connecté entre la sortie du premier amplificateur et une troisième tension d'alimentation choisie,
le premier amplificateur étant réalisé par un transistor PMOS monté en drain commun et polarisé via ledit commutateur
le second amplificateur étant réalisé par un transistor PMOS avec une grille d'oxyde fin monté en drain commun.

Selon un aspect particulier de l'invention, le premier amplificateur est réalisé par un premier transistor NMOS monté en drain commun et polarisé via un commutateur connecté entre la source du transistor et la masse électrique.

Le second amplificateur est réalisé par un deuxième transistor NMOS avec une grille d'oxyde fin monté en drain commun.

Selon un aspect particulier de l'invention, le premier amplificateur est réalisé par un premier transistor natif monté en drain commun et polarisé via un commutateur connecté entre la source du transistor et la masse électrique,

Le second amplificateur est réalisé par un deuxième transistor natif monté en drain commun.

l'invention a pour objet aussi un capteur d'images comprenant

une matrice de pixels dans laquelle au moins un pixel est réalisé selon l'une quelconque des revendications précédentes,
un circuit de génération des signaux de commande des pixels,
un circuit d'échantillonnage agencé au pied de chaque colonne de la matrice de pixels connecté à la sortie du commutateur de sélection de ligne de chaque pixel de la colonne correspondante,
un circuit d'alimentation pour alimenter chaque colonne de la matrice de pixels.

Selon un aspect particulier de l'invention, le circuit d'échantillonnage du capteur d'image est un circuit de double échantillonnage corrélé.

D'autres caractéristiques et avantages de la présente invention apparaîtront mieux à la lecture de la description qui suit en relation aux dessins annexés suivants.

[Fig. 1] représente un schéma électrique d'un circuit de pixel CMOS selon l'art antérieur,

[Fig. 2] représente un schéma fonctionnel d'un pixel selon l'invention,

[Fig. 3] représente un schéma fonctionnel partiel d'un capteur d'images utilisant un pixel selon l'invention,

[Fig. 4] représente un schéma électrique du pixel selon un premier mode de réalisation,

[Fig. 5a] représente un diagramme de fonctionnement du capteur d'images intégrant des pixels selon la figure 4,

[Fig. 5b] représente un chronogramme de fonctionnement du capteur d'images intégrant des pixels selon la figure 4,

[Fig. 6] représente un schéma électrique du pixel selon un deuxième mode de réalisation de l'invention,

[Fig. 7a] représente un diagramme de fonctionnement du capteur d'images intégrant des pixels selon la figure 6,

[Fig. 7b] représente un chronogramme de fonctionnement du capteur d'images intégrant des pixels selon la figure 6,

[Fig. 8] représente un schéma électrique du pixel selon un troisième mode de réalisation de l'invention,

[Fig. 9] représente un schéma électrique du pixel selon un quatrième mode de réalisation de l'invention.

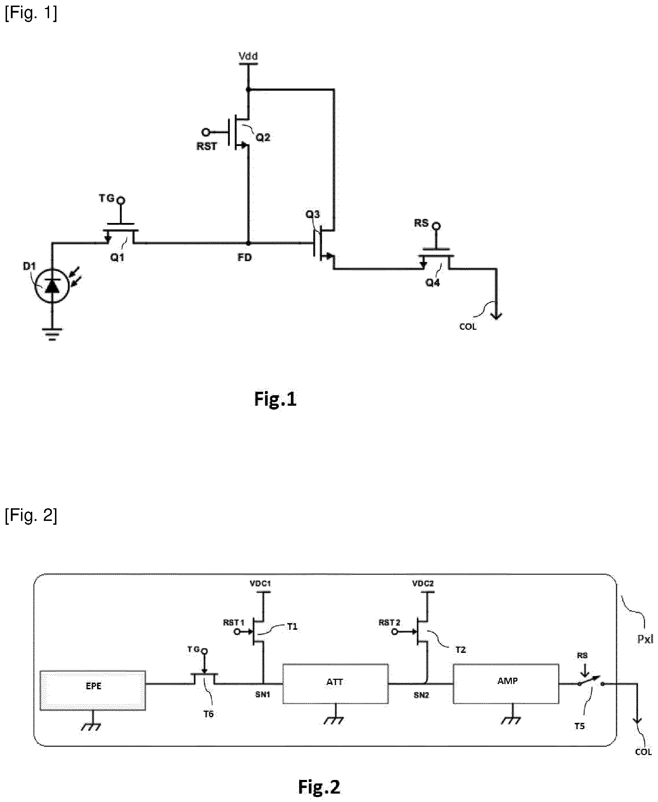

La figure 2 est un schéma fonctionnel représentant un aspect général de l'architecture d'un pixel actif selon l'invention. Le pixel Pxl comporte les éléments suivants.

Un élément à effet photoélectrique EPE est utilisé pour générer des charges électriques en réponse à une radiation électromagnétique incidente. Un exemple de réalisation de cet élément est une photodiode pincée. La photodiode est construite généralement par la jonction d'une couche mince dopée P+ avec une zone de diffusion dopée N dans un substrat semi-conducteur dopé P. Lors d'une exposition à un rayonnement électromagnétique, les photons incidents vont interagir avec le substrat semi-conducteur pour générer des paires électron-trou qui seront collectées dans la zone de charge d'espace de la jonction et plus exactement dans la cathode pour le cas des électrons. On parle ici de la phase d'intégration des charges.

Une grille de transfert T6 est connectée entre la sortie de l'élément à effet photoélectrique EPE et le noeud de détection primaire SN1. Cette grille commande un transfert de charges électriques vers le noeud de détection primaire SN1. En effet, lorsque le signal externe au pixel TG connecté à la grille de transfert est à un niveau haut, les charges créées peuvent diffuser vers le noeud de détection primaire SN1. La grille correspond généralement à une grille en poly- silicium connectée au noeud de détection primaire SN1 qui est une zone de diffusion flottante de type N. On parle ici de la phase de transfert des charges.

Un atténuateur ATT est connecté entre le noeud de détection primaire SN1 et le noeud de détection secondaire SN2. Cet atténuateur ATT présente un facteur d'atténuation choisi pour convertir une première plage de tension en entrée en une seconde plage de tension en sortie, la seconde plage de tension étant plus réduite que la première plage de tension. En effet, la tension dans le noeud SN1 varie sur une première plage de tension pour assurer un fonctionnement optimal des transistors à oxyde épais connectés à ce noeud. L'utilisation de ce type de transistors permet d'obtenir une plage dynamique de fonctionnement du pixel suffisante surtout dans le cas d'une photodiode pincée. On définit le facteur d'atténuation g de l'atténuateur comme le rapport entre la tension au noeud de détection primaire SN1 et la tension au noeud de détection secondaire SN2 notés respectivement V1 et V2. La valeur du facteur d'atténuation g doit être comprise entre 0 et 1 pour assurer la fonction de l'atténuateur ATT. On obtiendra ainsi une plage de tension réduite sur le noeud de détection secondaire SN2 adapté à un fonctionnement optimal des transistors à oxyde fin connectés à ce noeud.

A titre d'exemple, pour un procédé de fabrication semi-conducteur déterminé (65nm, 45nm), les transistors à oxyde épais sont adaptés à une plage de tensions entre 0V et 3.3V dans des conditions nominales. Pour le même procédé de fabrication semi-conducteur, les transistors à oxyde fin sont adaptés à une plage de tension délimitée par une tension de claquage à 1.2V.

Le pixel Pxl comprend aussi un premier commutateur de réinitialisation T1 connecté au noeud de détection primaire SN1 pour réinitialiser le noeud de détection SN1 à une première tension de référence choisie VDC1. Ce commutateur est contrôlé par un premier signal de réinitialisation RST1. Sans perte de généralité, sur la figure 2 cette fonctionnalité est assurée par un transistor NMOS, mais il pourrait être remplacé par un autre type de transistor.

Le pixel Pxl comprend encore un second commutateur de réinitialisation M2 connecté au noeud de détection secondaire SN2 pour réinitialiser le noeud de détection SN2 à une seconde tension de référence choisie VDC2. Ce commutateur est contrôlé par un second signal de réinitialisation RST2. Sans perte de généralité, dans la figure 2 cette fonctionnalité est assurée par un transistor NMOS, mais il pourrait être remplacé par un autre type de transistor.

Le pixel Pxl comprend encore un étage d'amplification AMP comprenant au moins un premier amplificateur. Cet étage est caractérisé par l'utilisation de transistors à faibles bruits pour son implémentation. Ces transistors peuvent être des transistors à oxyde fin ou des transistors natifs (en anglais Native Transistors) ou des transistors à canal enterré (en anglais Burried Channel Transistors) présentant aussi un bruit faible par rapport aux transistors à oxyde épais. L'entrée de l'amplificateur AMP est connectée au noeud de détection secondaire SN2. Le rôle principal de cet étage est la conversion de charges récoltées dans le noeud de détection SN2 en une tension électrique propagée pour la lecture. Cela correspond au passage du domaine des charges au domaine des tensions dans le pixel. On parle ici d'une phase de lecture du pixel. L'utilisation de transistors à oxyde fin permet de réduire significativement le bruit généré dans le pixel et spécifiquement le bruit de scintillement. En effet, la composante de bruit de scintillement à travers un transistor CMOS est inversement proportionnelle au carré de la capacité surfacique grille-substrat $C_{on}$ formé par l'oxyde de sa grille. En considérant que la capacité $C_{ox}$ est aussi inversement proportionnelle à l'épaisseur de l'oxyde utilisé pour fabriquer la grille, l'utilisation de transistor à oxyde fin dans l'étage d'amplification du pixel permet de limiter le bruit de scintillement au niveau du noeud de détection.

Le pixel Pxl comprend également un commutateur de sélection T5 connecté à la sortie de l'étage d'amplification AMP pour échantillonner le signal de sortie de l'étage d'amplification AMP. Le commutateur de sélection T5 est contrôlé par un signal de sélection de ligne noté RS (Row Select). Lorsque la ligne à laquelle appartient le pixel est choisie pour la lecture, le commutateur T5 est passant, laissant ainsi propager le signal à la sortie de l'étage d'amplification dans la colonne Col correspondante au pixel Pxl.

L'Homme du métier sélectionne l'implémentation convenable pour les composants T5, T1 et T2 dans le pixel Pxl en utilisant des transistors de type NMOS, PMOS ou une combinaison des deux types de transistors pour former un commutateur de type « pass-gate », tout en adaptant la logique des signaux RS, RST1 et RST2 à l'implémentation choisie.

Il convient de noter que les signaux de contrôle TG, RST1, RST2 et RS sont des signaux de commande des pixels qui proviennent d'un circuit de génération des signaux de commande implémenté à l'échelle du capteur d'images. L'architecture de la globalité du capteur sera présentée dans un passage ultérieur.

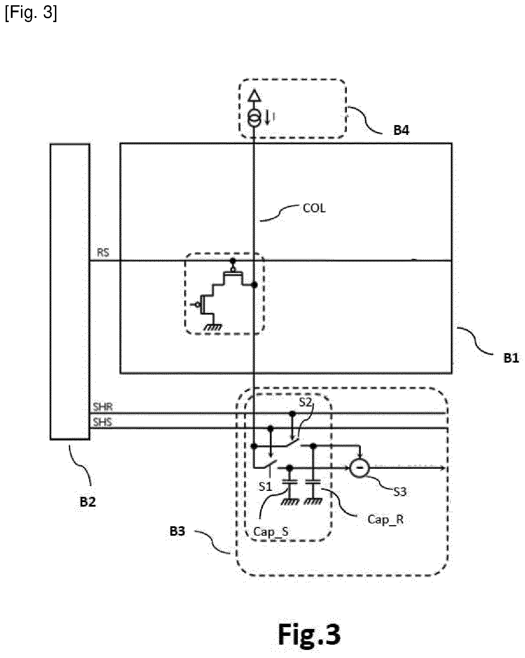

la figure 3 représente un schéma d'un mode de réalisation d'un capteur d'images utilisant un pixel selon l'invention. Le capteur d'images à pixels actifs décrit à la figure 3 comporte les éléments suivants.

Une matrice de pixels actifs B1 contient au moins un pixel réalisé selon l'invention. La matrice est constituée de lignes et de colonnes de pixels. Sur la figure 3, seul l'étage de sortie d'un pixel a été représenté dans la matrice pour simplifier la représentation.

Le capteur d'images comporte aussi un circuit B2 de génération des signaux de commande des pixels. Ce circuit sert à contrôler les différentes phases de fonctionnement des pixels actifs de la matrice en générant, pour chaque pixel, les signaux RS pour la phase de lecture, TG pour la phase de transfert de charge et RST1, RST2 pour la réinitialisation des noeuds de détection. De plus, ce bloc génère deux autres signaux de contrôle, à savoir, SHR et SHS dont les fonctions seront détaillées ultérieurement.

Le capteur d'images comporte encore un circuit d'échantillonnage B3 agencé au pied de chaque colonne de la matrice de pixels et connecté à la sortie du commutateur de sélection de ligne T5 de chaque pixel de la colonne correspondante. Dans la figure 3, un circuit de double échantillonnage corrélé B3 est utilisé pour implémenter cette fonction. Cette solution de double échantillonnage corrélé permet de lire les signaux tout en éliminant le bruit kTC généré dans les pixels de la colonne concernée. Dans un premier temps, le signal de sortie du pixel échantillonné suite à une réinitialisation est enregistré dans l'élément capacitif Cap_R en activant le commutateur S2 contrôlé par le signal SHR. L'échantillon enregistré correspond au signal de réinitialisation. Dans un deuxième temps, le signal échantillonné après une exposition du pixel à la lumière est enregistré dans l'élément capacitif Cap_S en activant le commutateur S1 contrôlé par le signal SHS. L'échantillon enregistré correspond au signal utile. Une soustraction entre les deux signaux échantillonnés via un soustracteur S3 permet d'éliminer le bruit kTC. Le résultat de cette mesure différentielle est transmis vers un convertisseur analogique-numérique non représenté dans la figure 3 par souci de simplification. Il convient de noter que la lecture des échantillons se fait toujours ligne par ligne dans le cas d'une obturation globale ou déroulante.

Le capteur d'images comporte encore un circuit d'alimentation B4 pour alimenter chaque colonne de la matrice de pixels. Dans la figure 2, il s'agit d'une source de courant reliée au conducteur de la colonne. Cette source de courant commune à tous les pixels d'une colonne sert à polariser les transistors de l'étage d'amplification AMP lors d'une lecture du pixel.

D'autres variantes du capteur d'images incluant une matrice de pixels actifs selon l'invention peuvent être conçues aisément par l'Homme du métier.

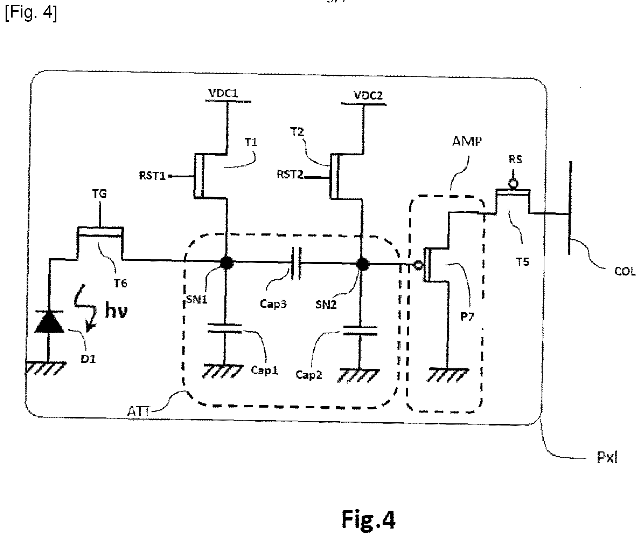

La figure 4 représente un premier mode de réalisation du pixel actif Pxl selon un mode de réalisation particulier de l'invention utilisant un premier type d'étage d'amplification adapté pour un mode de fonctionnement en obturation déroulante.

Une photodiode pincée D1, utilisée comme élément à effet photoélectrique, est associée à une grille de transfert T6.

Les commutateurs de réinitialisation T1 et T2 sont réalisés avec des transistors NMOS à oxyde épais.

Le commutateur de sélection de ligne T5 est réalisé avec un transistor PMOS d'oxyde fin.

Dans le mode de réalisation décrit à la figure 4, le bloc atténuateur ATT est réalisé avec un agencement de trois éléments capacitifs Cap1, Cap2 et Cap3, respectivement de capacités C1, C2, C3. Les éléments capacitifs sont connectés de la manière suivante : Cap1 est entre le noeud de détection primaire SN1 et la masse, Cap2 est entre le noeud de détection secondaire SN2 et la masse, Cap3 est entre SN1 et SN2.

L'étage amplificateur ATT selon le mode de réalisation décrit à la figure 4 est réalisé avec un transistor PMOS à oxyde fin monté en drain commun (circuit suiveur).

On va détailler dans ce paragraphe le calcul du facteur d'atténuation g de l'atténuateur ATT selon le mode de réalisation de la figure 4. On note V1 la tension entre SN1 et la masse, V2 la tension entre SN2 et la masse et V3 la tension entre SN1 et SN2. En appliquant la loi des mailles on obtient les relations suivantes :

[Math. 1]

$$V3 = V1 - V2$$

Les charges des différents éléments capacitifs s'expriment de la façon suivante :

[Math. 2]

$$q1 = C1.V1$$

[Math. 3]

$$q2 = C2.V2$$

[Math. 4]

$$q3 = C3.V3$$

Ce qui donne une charge totale au noeud SN1

[Math. 5]

$$Qsn1 = C1.V1 + C3.V3$$

De même pour la charge totale au noeud SN2 :

[Math. 6]

$$Qsn2 = C2.V2 - C3.V3$$

En combinant les égalités précédentes on obtient l'équation suivante :

[Math. 7]

$$V2 = \frac{Qsn2}{C1+C3} + \frac{C3}{C2+C3}V1$$

Or, lors d'une phase de réinitialisation les deux commutateurs T1 et T2 sont passants d'où la relation suivante :

[Math. 8]

$$Qsn2 = C2.VDC2 - C3.(VDC1 - VDC2)$$

Ainsi, en réinjectant la valeur de Qsn2 dans l'équation précédente on retrouve l'équation suivante :

[Math. 9]

$$V2 = \frac{C2.VDC2 - C3.(VDC1-VDC2)}{C1+C3} + \frac{C3}{C2+C3}V1$$

Le premier terme $\frac{C2.VDC2 - C3.(VDC1-VDC2)}{C1+C3}$ correspond au décalage de la tension continue entre V1 et V2 induit par l'atténuateur ATT. Le second terme $\frac{C3}{C2+C3}$ correspond au facteur d'atténuation entre V1 et V2 induit par l'atténuateur ATT. On vérifie bien que le facteur d'atténuation g est toujours inférieur à 1.

L'Homme du métier peut choisir les valeurs des capacités C1, C2 et C3 selon plusieurs contraintes. Ces trois valeurs offrent trois degrés de liberté pour trouver un compromis entre les différentes contraintes de conception du pixel. De plus, l'ajustement des valeurs de tension VDC1 et VDC2 permet à l'Homme du métier de spécifier, respectivement, le décalage entre les plages des tensions des noeuds SN1 et SN2. On présente dans ce paragraphe les différentes contraintes.

Une première contrainte concerne la réduction de bruit. Il a été démontré précédemment que la valeur du facteur d'atténuation de l'atténuateur ATT est directement liée à la réduction du bruit dans le pixel Pxl. Il a été démontré que ce facteur d'atténuation dépend des capacités C3 et C2. Une deuxième contrainte concerne la dynamique du circuit (Dynamic Range en anglais - DR). Autrement dit, il s'agit entre autre de la dynamique et la charge de saturation du pixel. Un facteur utilisé par l'Homme du métier pour la conception d'un pixel actif est le facteur de conversion de pixel noté CVF (Charge to Voltage conversion Factor). L'agencement des éléments capacitifs décrits dans la figure 4 donne un facteur CVF exprimé via l'équation suivante :

[Math. 10]

$$CVF = \frac{e.(C3+C2)}{C3.C1+C1.C2+C3.C2}$$

Avec e la charge élémentaire de l'électron. Une troisième contrainte concerne la taille du pixel qui doit être minimisée pour augmenter la densité de la matrice de pixels actifs et faciliter l'implémentation du capteur d'images dans le système global.

Dans un mode de réalisation particulier, l'Homme du métier peut concevoir l'atténuateur de la façon suivante. L'élément capacitif Cap2 correspond à la capacité intrinsèque du noeud de détection secondaire SN2 par rapport à la masse. Ainsi Cap2 n'est pas un composant introduit dans le circuit mais une capacité parasite dépendant du procédé de fabrication semi-conducteur en couches minces et du masque de fabrication du pixel. La capacité C3 est le degré de liberté restant pour obtenir la valeur de facteur d'atténuation de l'atténuateur utile à l'optimisation du bruit. Il reste alors la capacité C1 qui est déterminée de sorte à respecter un facteur de conversion du pixel choisi CVF.

L'utilisation d'un seul transistor en drain commun dans l'étage amplificateur est adaptée à un fonctionnement du capteur d'images en obturation déroulante.

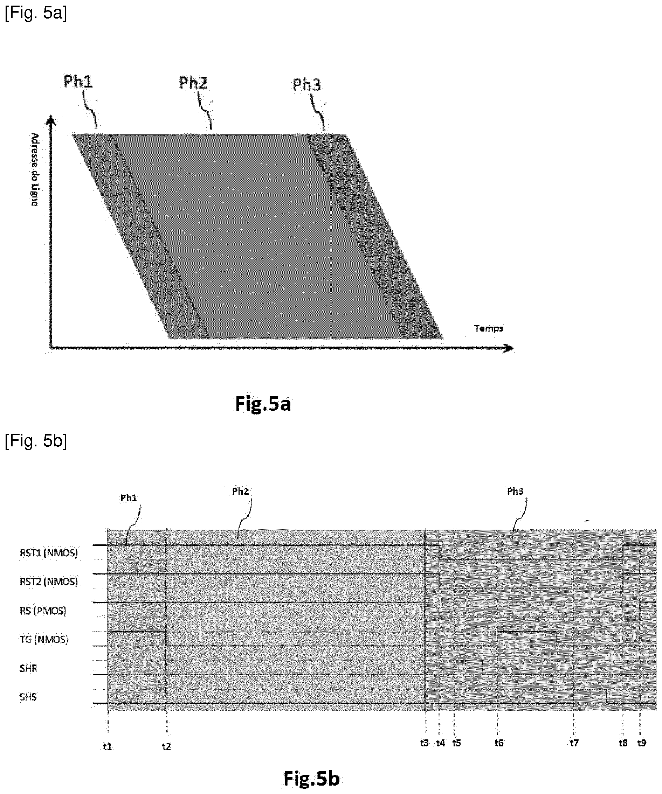

Les figures 5a et 5b détaillent le fonctionnement au cours du temps en obturation déroulante du pixel Pxl de la figure 4.

La figure 5a montre les différentes phases au cours du temps pour chaque adresse de chaque ligne de pixels de la matrice de pixels selon la figure 4. La pente du diagramme reflète le déclenchement de toutes les phases ligne par ligne.

On distingue trois phases de fonctionnement lors de la capture :

La phase Ph1 est la remise à zéro des noeuds de détection primaires et secondaires pour chaque pixel ligne à ligne et de la photodiode.

La phase Ph2 est l'intégration des charges par l'exposition des photodiodes de chaque pixel ligne par ligne.

La phase Ph3 est la lecture du signal différentiel entre le signal de réinitialisation et le signal utile ligne par ligne par l'étage d'amplification de chaque pixel et le commutateur T5 associés avec le circuit de double échantillonnage corrélé B3 au pied de chaque colonne.

La figure 5b représente un chronogramme de fonctionnement du pixel de la figure 4 en obturation déroulante. Elle représente les signaux RST1, RST2, RS, TG, SHR et SHS définis précédemment et générés par le circuit de génération des signaux de commande B2.

A l'instant t1, les signaux RST1 et RST2 sont hauts et les deux commutateurs T1 et T2 sont passants. Le front montant du signal TG déclenche une réinitialisation des noeuds de détection SN1 et SN2 du pixel Pxl et le vidage des électrons de la cathode de la photodiode D1. A l'instant t2, le front descendant du signal TG active l'ouverture du commutateur T6. Cet événement marque le démarrage de la phase d'intégration des charges Ph2.

Après la fin de la phase d'intégration Ph2, la phase de lecture Ph3 commence avec le front descendant du signal de sélection de la ligne RS à l'instant t3. Ainsi le commutateur T5 est passant et le signal détecté peut se propager dans la colonne du pixel. A t4, les deux fronts descendants des signaux RST1 et RST2 activent la fermeture respectivement des deux commutateurs T1 et T2.

L'impulsion du signal SHR à l'instant t5 permet l'échantillonnage du signal de réinitialisation et son stockage dans le circuit de double échantillonnage corrélé B3.

L'impulsion du signal TG à l'instant t6 permet le transfert des charges à travers les différents étages du pixel pour obtenir le signal utile suite à la phase d'intégration Ph2 à la colonne connectée à la sortie du pixel Pxl.

A l'instant t7, l'impulsion du signal SHS permet l'échantillonnage du signal utile et son stockage dans le circuit de double échantillonnage corrélé B3 pour ensuite effectuer la soustraction et l'obtention d'un échantillon différentiel sans bruit kTC.

A l'instant t8, les fronts montants des signaux RST1 et RST2 permettent de rétablir les tensions VDC1 et VDC2 respectivement aux noeuds de détection SN1 et SN2. Le front montant du signal RS coupe le commutateur T5 ce qui correspond à la fin de la phase Ph3 de lecture du pixel.

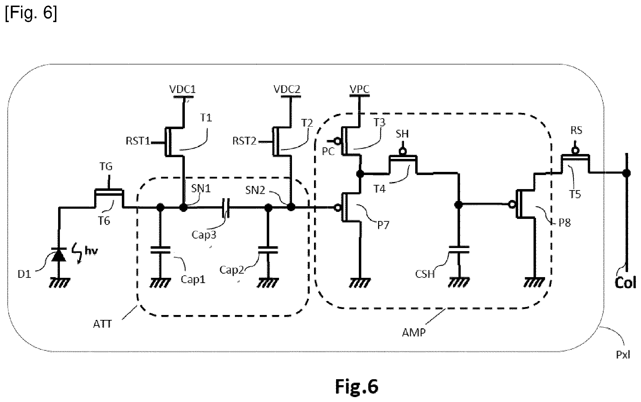

La figure 6 représente un deuxième mode de réalisation du pixel actif Pxl selon l'invention. La différence avec le mode de réalisation de la figure 4 réside dans l'implémentation de l'étage amplificateur AMP. En effet, il se compose dans ce cas de trois parties.

Un premier amplificateur réalisé via un transistor PMOS oxyde fin monté en drain commun P7 est polarisé via un commutateur T3 et contrôlé par un signal externe PC.

Un étage d'échantillonnage comprenant un commutateur d'échantillonnage T4 est contrôlé par un signal externe SH pour échantillonner le signal de sortie du premier amplificateur. Un élément capacitif d'échantillonnage CSH est utilisé pour stocker le signal échantillonné.

Un deuxième amplificateur réalisé via un transistor PMOS oxyde fin monté en drain commun P8 est connecté au commutateur T5 via sa source.

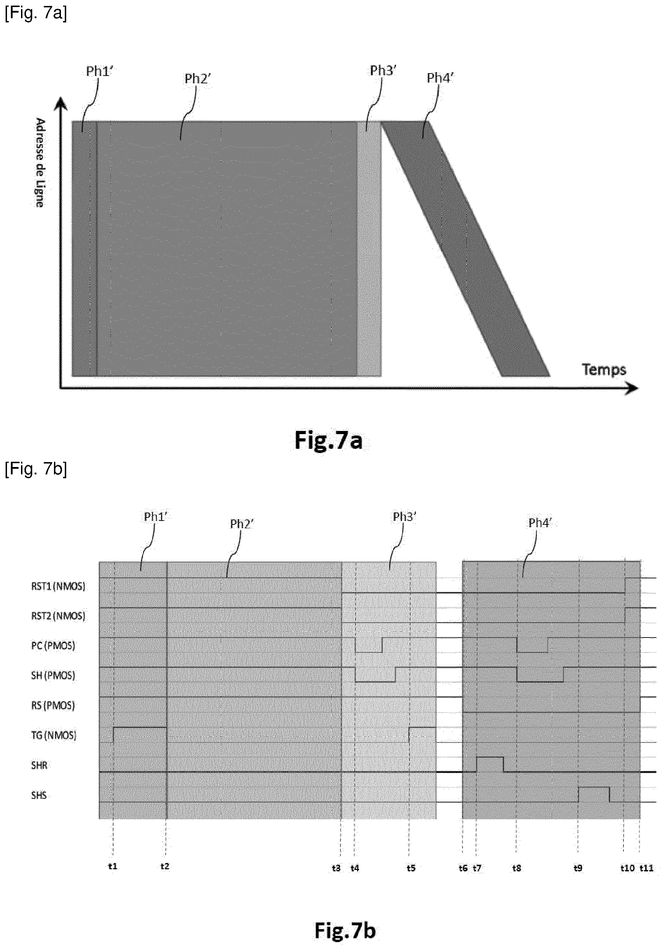

Cette architecture à double amplificateur permet un fonctionnement en obturation globale tel que décrit sur la figure 7a et la figure 7b.

La figure 7a montre les différentes phases au cours du temps pour chaque adresse de chaque ligne de pixels de la matrice de pixels selon la figure 6. Les phases de fonctionnement se composent de la façon suivante.

La phase Ph1' correspond à la remise à zéro globale des noeuds de détection primaires et secondaires et la réinitialisation de la photodiode pour chaque pixel simultanément.

La phase Ph2' est une phase d'intégration des charges par l'exposition des photodiodes de tous les pixels simultanément.

La phase Ph3' est une phase de transfert global des charges générées à la fin de l'intégration vers le noeud de détection primaire SN1 et par conséquent le noeud de détection secondaire SN2 dans chaque pixel de la matrice simultanément. Durant cette phase aussi, le stockage du signal de réinitialisation dans l'élément capacitif d'échantillonnage CSH de chaque pixel est effectué.

La phase Ph4' est une phase de lecture du signal différentiel entre le signal de réinitialisation et le signal utile ligne par ligne par l'étage d'amplification de chaque pixel et le commutateur T5 associés avec le circuit de double échantillonnage corrélé B3 au pied de chaque colonne.

Le diagramme en carré montre le fonctionnement global des pixels de la matrice pour les trois premières phases Ph1', Ph2', Ph3'. La dernière phase Ph4' de lecture se fait ligne à ligne d'une façon semblable à la phase de lecture Ph3 dans la figure 5a.

La figure 7b représente un chronogramme de fonctionnement du pixel de la figure 6 en obturation globale. Elle représente les signaux RST1, RST2, RS, TG, PC, SH, SHR et SHS définis précédemment et générés par le circuit de génération des signaux de commande B2.

A l'instant t1, les signaux RST1 et RST2 sont hauts, les deux commutateurs T1 et T2 sont passants et les noeuds de détections SN1 et SN2 sont réinitialisés, respectivement, aux tensions de références VDC1 et VDC2. Le front montant du signal TG déclenche le vidage des électrons de la cathode de la photodiode D1. A l'instant t2, le front descendant du signal TG active l'ouverture du commutateur T6. Cet événement marque le démarrage de la phase d'intégration des charges Ph2'.

Après la fin de la phase d'intégration Ph2', la phase de transfert de charges globale Ph3' est déclenchée avec les fronts descendants des signaux RST1 et RST2 à l'instant t3 suivis des fronts descendants des signaux PC et SH à l'instant t4 qui rendent les transistors T3 et T4 passants (car réalisés via une technologie PMOS). Ainsi le signal de réinitialisation est échantillonné et stocké dans l'élément capacitif CSH.

A l'instant t5, l'impulsion du signal TG permet aux charges générées suite à l'intégration de se propager au noeud de détection SN1 et par conséquent au noeud de détection SN2 dans chaque pixel d'une façon simultanée. La fin de l'impulsion correspond à l'achèvement de la phase Ph3'.

A l'instant t6, le front descendant du signal RS rend le transistor T5 passant pour entamer la phase de lecture Ph4'. Le signal à la sortie du pixel en lecture peut se propager dans la colonne équivalente.

L'impulsion du signal SHR à l'instant t7 permet l'échantillonnage du signal de réinitialisation et son stockage dans le circuit de double échantillonnage corrélé B3.

A l'instant t8, les fronts descendants des signaux PC et SH permettent la conversion des charges générées suite à l'intégration pour passer dans le domaine des tensions. Le signal utile est échantillonné via l'étage d'échantillonnage intégré dans chaque pixel.

A l'instant t9, l'impulsion du signal SHS permet l'échantillonnage du signal utile et son stockage dans le circuit de double échantillonnage corrélé B3 pour ensuite effectuer la soustraction et l'obtention d'un échantillon différentiel sans bruit kTC.

A l'instant t10, les deux fronts montants des signaux RST1 et RST2 activent l'ouverture respectivement des commutateurs T1 et T2.

A l'instant t11, le front montant du signal RS coupe le commutateur T5 ce qui correspond à la fin de la phase Ph4' de lecture du pixel.

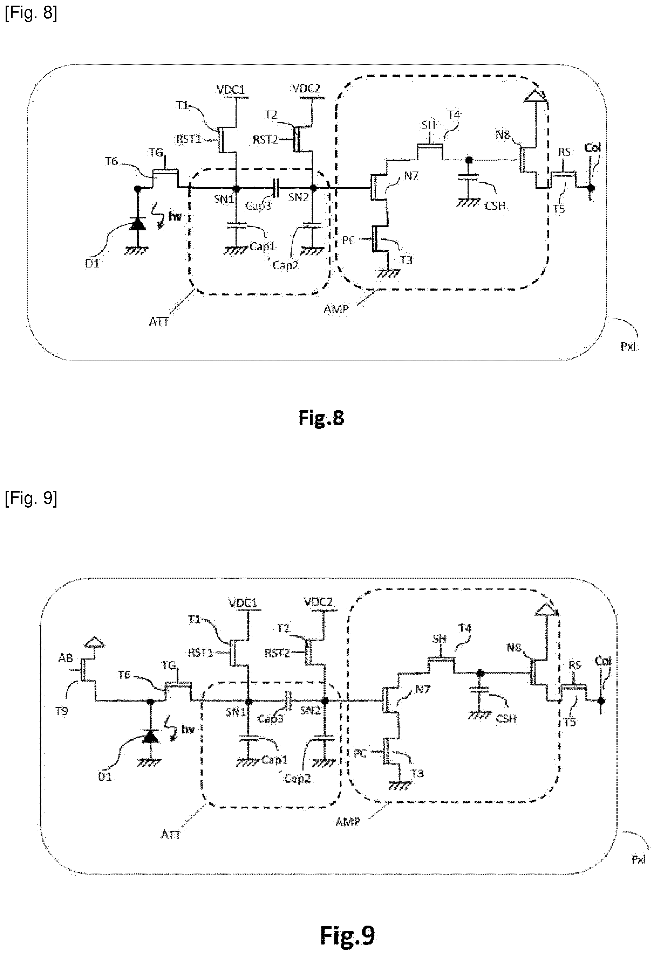

La figure 8 représente un troisième mode de réalisation du pixel selon l'invention. L'étage d'amplification AMP est réalisé avec deux amplificateurs et un étage d'échantillonnage comme décrit dans la figure 6. La différence est dans l'implémentation de l'étage AMP avec des transistors de type NMOS à oxyde fin. Il sera clair pour l'Homme du métier d'adapter le principe de l'invention avec des variantes de la technologie CMOS.

La figure 9 représente un quatrième mode de réalisation d'un pixel selon l'invention. Le pixel Pxl intègre en plus un transistor anti-éblouissement T9 contrôlé par un signal d'entrée AB. Ce transistor permet de remettre la photodiode à zéro sans passer par le noeud de détection primaire SN1. Il permet aussi le déclenchement de l'intégration de l'image suivante avant la fin de la lecture de l'image courante. On parle ici « d'intégration pendant la lecture » (intégration While Read en Anglais - IWR).

En guise de conclusion, l'invention décrite permet d'implémenter un capteur d'images à pixels actifs incluant une matrice de pixel basé sur un circuit de pixel présentant certaines caractéristiques spécifiques. Le circuit de pixel selon l'invention présente des avantages techniques par rapport à l'état de l'art permettant la réduction du bruit de scintillement et donc l'optimisation du rapport saturation en charge sur bruit et donc présenter les caractéristiques d'un pixel d'imagerie à grande gamme dynamique (HDR) ; tout en restant compatible avec les deux modes d'obturation connu à savoir l'obturation globale et l'obturation déroulante. L'Homme du métier peut concevoir l'étage d'atténuation interne au circuit du pixel pour adapter la dynamique à l'entrée de l'étage d'amplification et réduire le bruit sans dégrader les autres critères de conception du pixel et donc du capteur d'images dans sa globalité.

**Revendications**

1. Pixel (Pxl) d'un capteur d'images, le pixel (Pxl) comprenant :

   un élément à effet photoélectrique (EPE) pour générer des charges électriques en réponse à une radiation électromagnétique incidente,
   un noeud de détection primaire (SN1),
   un noeud de détection secondaire (SN2),
   une grille de transfert (T6), connectée entre la sortie de l'élément à effet photoélectrique (EPE) et le noeud de détection primaire (SN1), pour commander un transfert de charges électriques vers le noeud de détection primaire (SN1),
   un atténuateur (ATT) connecté entre le noeud de détection primaire (SN1) et le noeud de détection secondaire (SN2) ayant un facteur d'atténuation choisi pour convertir une première plage de tension en entrée en une seconde plage de tension en sortie, la seconde plage de tension étant plus réduite que la première plage de tension,
   un premier commutateur de réinitialisation (M1) connecté au noeud de détection primaire (SN1) pour réinitialiser le noeud de détection (SN1) à une première tension d'alimentation choisie (VDC1) ;
   un second commutateur de réinitialisation (M2) connecté au noeud de détection secondaire (SN2) pour réinitialiser le noeud de détection (SN2) à une seconde tension d'alimentation choisie (VDC2) ;
   un étage d'amplification (AMP) comprenant un premier amplificateur (A1) comprenant un premier transistor à bas bruit (T7) disposant d'une grille connectée au noeud de détection secondaire (SN2),
   un commutateur de sélection (T5) connecté à la sortie de l'étage d'amplification (AMP) pour échantillonner le signal de sortie de l'étage d'amplification (AMP) ;
   le pixel étant **caractérisé en ce que** l'atténuateur (ATT) comprend :

      un premier élément capacitif (Cap1) réalisé entre le noeud de détection primaire (SN1) et une masse électrique,

      un deuxième élément capacitif (Cap2) réalisé entre le noeud de détection secondaire (SN2) et la masse électrique,
      un troisième élément capacitif (Cap3) réalisé entre le noeud de détection primaire (SN1) et le noeud de détection secondaire (SN2).

2. Pixel selon la revendication 1, dans lequel le deuxième élément capacitif (Cap2) est réalisé par la capacité intrinsèque du noeud de détection secondaire (SN2) par rapport à la masse électrique.

3. Pixel selon l'une des revendications 1 ou 2, dans lequel le troisième élément capacitif (Cap3) présente une capacité C3 déterminée de sorte à respecter le facteur d'atténuation choisi.

4. Pixel selon l'une quelconque des revendications 1 à 3, dans lequel le premier élément capacitif (Cap1) présente une capacité C1 déterminée de sorte à respecter un facteur de conversion du pixel choisi.

5. Pixel selon l'une quelconque des revendications précédentes, dans lequel l'élément à effet photoélectrique (EPE) est une photodiode pincée (D1).

6. Pixel selon l'une quelconque des revendications précédentes, dans lequel la sortie du premier amplificateur (A1) est connectée à la sortie de l'étage d'amplification (AMP).

7. Pixel selon la revendication 6, dans lequel le premier amplificateur (A1) est un transistor PMOS ou NMOS avec une grille d'oxyde fin, monté en drain commun.

8. Pixel selon la revendication 6, dans lequel le premier amplificateur (A1) est un transistor natif, monté en drain commun.

9. Pixel selon l'une quelconque des revendications 1 à 5, dans lequel l'étage d'amplification (AMP) comprend :

   un étage d'échantillonnage comprenant
   un commutateur d'échantillonnage (T4) pour échantillonner le signal de sortie du premier amplificateur (A1),
   et un élément capacitif d'échantillonnage (CSH) pour stocker le signal échantillonné,
   un second amplificateur (A2) ayant une entrée connectée à la sortie de l'étage d'échantillonnage et ayant une sortie connectée à la sortie de l'étage d'amplification (AMP).

10. Pixel selon la revendication 9 comprenant

    un commutateur (T3) connecté entre la sortie du premier amplificateur (A1) et une troisième tension d'alimentation choisie (VPC),

le premier amplificateur (A1) étant réalisé par un transistor PMOS monté en drain commun (P7) et polarisé via le commutateur (T3),

le second amplificateur (A2) étant réalisé par un transistor PMOS avec une grille d'oxyde fin monté en drain commun (P8).

11. Pixel selon la revendication 9 dans lequel

le premier amplificateur (A1) est réalisé par un premier transistor NMOS monté en drain commun (N7) et polarisé via un commutateur (T3) connecté entre la source du transistor (N7) et la masse électrique,

le second amplificateur (A2) est réalisé par un deuxième transistor NMOS avec une grille d'oxyde fin monté en drain commun (N8).

12. Pixel selon la revendication 9 dans lequel

le premier amplificateur (A1) est réalisé par un premier transistor natif monté en drain commun (N7) et polarisé via un commutateur (T3) connecté entre la source du transistor (N7) et la masse électrique,

le second amplificateur (A2) est réalisé par un deuxième transistor natif monté en drain commun (N8).

13. Capteur d'images comprenant

une matrice de pixels (B1) dans laquelle au moins un pixel est réalisé selon l'une quelconque des revendications précédentes,

un circuit de génération des signaux de commande des pixels (B2),

un circuit d'échantillonnage (B3) agencé au pied de chaque colonne de la matrice de pixels connecté à la sortie du commutateur de sélection de ligne (T5) de chaque pixel de la colonne correspondante,

un circuit d'alimentation (B4) pour alimenter chaque colonne de la matrice de pixels.

14. Capteur d'images selon la revendication 13 dans lequel le circuit d'échantillonnage (B3) est un circuit de double échantillonnage corrélé.

**Patentansprüche**

1. Pixel (Pxl) eines Bildsensors, wobei das Pixel (Pxl) Folgendes umfasst:

ein Element mit photoelektrischem Effekt (EPE) zum Erzeugen von elektrischen Ladungen als Reaktion auf eine einfallende elektromagnetische Strahlung,

einen primären Erkennungsknoten (SN1),

einen sekundären Erkennungsknoten (SN2),

ein Übertragungsgitter (T6), das zwischen dem Ausgang des Elements mit photoelektrischem Effekt (EPE) und dem primären Erkennungsknoten (SN1) angeschlossen ist, um eine Übertragung von elektrischen Ladungen zu dem primären Erkennungsknoten (SN1) zu steuern,

ein Dämpfungsglied (ATT), das zwischen dem primären Erkennungsknoten (SN1) und dem sekundären Erkennungsknoten (SN2) angeschlossen ist, das einen Dämpfungsfaktor aufweist, der so ausgewählt ist, dass er einen ersten Spannungsbereich am Eingang in einen zweiten Spannungsbereich am Ausgang umwandelt, wobei der zweite Spannungsbereich kleiner als der erste Spannungsbereich ist,

einen ersten Rückstellschalter (M1), der an den primären Erkennungsknoten (SN1) angeschlossen ist, um den Erkennungsknoten (SN1) auf eine erste gewählte Versorgungsspannung (VDC1) zurückzustellen;

einen zweiten Rückstellschalter (M2), der an den sekundären Erkennungsknoten (SN2) angeschlossen ist, um den Erkennungsknoten (SN2) auf eine zweite gewählte Versorgungsspannung (VDC2) zurückzustellen;

eine Verstärkerstufe (AMP), umfassend einen ersten Verstärker (A1), umfassend einen ersten Transistor mit niedrigem Eigenrauschen (T7), der ein Gitter aufweist, das an den sekundären Erkennungsknoten (SN2) angeschlossen ist,

einen Auswahlschalter (T5), der an den Ausgang der Verstärkerstufe (AMP) angeschlossen ist, um das Ausgangssignal der Verstärkerstufe (AMP) abzutasten;

wobei das Pixel **dadurch gekennzeichnet ist, dass** das Dämpfungsglied (ATT) Folgendes umfasst:

ein erstes kapazitives Element (Cap1), das zwischen dem primären Erkennungsknoten (SN1) und einer elektrischen Masse ausgeführt ist,

ein zweites kapazitives Element (Cap2), das zwischen dem sekundären Erkennungsknoten (SN2) und der elektrischen Masse ausgeführt ist,

ein drittes kapazitives Element (Cap3), das zwischen dem primären Erkennungsknoten (SN1) und dem sekundären Erkennungsknoten (SN2) ausgeführt ist.

2. Pixel nach Anspruch 1, wobei das zweite kapazitive Element (Cap2) durch die intrinsische Kapazität des sekundären Erkennungsknotens (SN2) in Bezug auf die elektrische Masse ausgeführt ist.

3. Pixel nach einem der Ansprüche 1 oder 2, wobei das dritte kapazitive Element (Cap3) eine bestimmte Kapazität C3 derart hat, dass der gewählte Dämpfungsfaktor eingehalten wird.

4. Pixel nach einem der Ansprüche 1 bis 3, wobei das erste kapazitive Element (Cap1) eine bestimmte Kapazität C1 derart hat, dass ein Umwandlungsfaktor des gewählten Pixels eingehalten wird.

5. Pixel nach einem der vorhergehenden Ansprüche, wobei das Element mit photoelektrischem Effekt (EPE) eine gepinnte Photodiode (D1) ist.

6. Pixel nach einem der vorhergehenden Ansprüche, wobei der Ausgang des ersten Verstärkers (A1) an den Ausgang der Verstärkerstufe (AMP) angeschlossen ist.

7. Pixel nach Anspruch 6, wobei der erste Verstärker (A1) ein PMOS- oder NMOS-Transistor mit einem Feinoxidgitter ist, der in Drain-Schaltung montiert ist.

8. Pixel nach Anspruch 6, wobei der erste Verstärker (A1) ein nativer Transistor ist, der in Drain-Schaltung montiert ist.

9. Pixel nach einem der Ansprüche 1 bis 5, wobei die Verstärkerstufe (AMP) Folgendes umfasst:

eine Abtaststufe, umfassend einen Abtastschalter (T4) zum Abtasten des Ausgangssignals des ersten Verstärkers (A1), und ein kapazitives Abtastelement (CSH) zum Speichern des abgetasteten Signals, einen zweiten Verstärker (A2) mit einem Eingang, der an den Ausgang der Abtaststufe angeschlossen ist und einen Ausgang aufweist, der an den Ausgang der Verstärkerstufe (AMP) angeschlossen ist.

10. Pixel nach Anspruch 9, umfassend

einen Schalter (T3), der zwischen dem Ausgang des ersten Verstärkers (A1) und einer dritten gewählten Versorgungsspannung (VPC) angeschlossen ist, wobei der erste Verstärker (A1) durch einen PMOS-Transistor ausgeführt ist, der in Drain-Schaltung (P7) montiert und über den Schalter (T3) polarisiert ist, wobei der zweite Verstärker (A2) durch einen PMOS-Transistor mit einem Feinoxidgitter ausgeführt ist, der in Drain-Schaltung (P8) montiert ist.

11. Pixel nach Anspruch 9, wobei

der erste Verstärker (A1) durch einen ersten NMOS-Transistor ausgeführt ist, der in Drain-Schaltung (N7) montiert und über einen Schalter (T3) polarisiert ist, der zwischen der Quelle des Transistors (N7) und der elektrischen Masse angeschlossen ist, der zweite Verstärker (A2) durch einen zweiten NMOS-Transistor mit einem Feinoxidgitter ausgeführt ist, der in Drain-Schaltung (N8) montiert ist.

12. Pixel nach Anspruch 9, wobei

der erste Verstärker (A1) durch einen ersten nativen Transistor ausgeführt ist, der in Drain-Schaltung (N7) montiert und über einen Schalter (T3) polarisiert ist, der zwischen der Quelle des Transistors (N7) und der elektrischen Masse angeschlossen ist, der zweite Verstärker (A2) durch einen zweiten nativen Transistor ausgeführt ist, der in Drain-Schaltung (N8) montiert ist.

13. Bildsensor, umfassend

eine Pixelmatrix (B1), bei der mindestens ein Pixel nach einem der vorhergehenden Ansprüche ausgeführt ist, eine Schaltung zum Erzeugen von Pixelsteuersignalen (B2), eine Abtastschaltung (B3), die an der Basis einer jeden Spalte der Pixelmatrix eingerichtet ist, die an den Ausgang des Leitungsauswahlschalters (T5) eines jeden Pixels der entsprechenden Spalte angeschlossen ist, einen Versorgungsstromkreis (B4) zum Stromversorgen jeder Spalte der Pixelmatrix.

14. Bildsensor nach Anspruch 13, wobei die Abtastschaltung (B3) eine Schaltung zum doppelten korrelierten Abtasten ist.

**Claims**

1. A pixel (Pxl) of an image sensor, the pixel (Pxl) comprising:

a photoelectric effect element (EPE) for generating electrical charges in response to incident electromagnetic radiation, a primary detection node (SN1), a secondary detection node (SN2), a transfer grid (T6) which is connected between the output of the photoelectric effect element (EPE) and the primary detection node (SN1) to control a transfer of electrical charges towards the primary detection node (SN1),

an attenuator (ATT) which is connected between the primary detection node (SN1) and the secondary detection node (SN2) and which has an attenuation factor selected to convert a first input voltage range into a second output voltage range, the second voltage range being smaller than the first voltage range,

a first re-initialisation commutator (M1) which is connected to the primary detection node (SN1) to re-initialise the detection node (SN1) at a first selected supply voltage (VDC1);

a second re-initialisation commutator (M2) which is connected to the secondary detection node (SN2) to re-initialise the detection node (SN2) at a second selected supply voltage (VDC2);

an amplification stage (AMP) comprising a first amplifier (A1) comprising a first low-noise transistor (T7) which has a grid which is connected to the secondary detection node (SN2),

a selection commutator (T5) which is connected to the output of the amplification stage (AMP) to sample the output signal of the amplification stage (AMP);

the pixel being **characterised in that** the attenuator (ATT) comprises:

a first capacitive element (Cap1) which is produced between the primary detection node (SN1) and an electrical earth,

a second capacitive element (Cap2) which is produced between the secondary detection node (SN2) and the electrical earth,

a third capacitive element (Cap3) which is produced between the primary detection node (SN1) and the secondary detection node (SN2).

2. The pixel according to claim 1, wherein the second capacitive element (Cap2) is formed by the intrinsic capacitance of the secondary detection node (SN2) relative to the electrical earth.

3. The pixel according to any one of claim 1 or claim 2, wherein the third capacitive element (Cap3) has a predetermined capacitance C3 so as to comply with the selected attenuation factor.

4. The pixel according to any one of claims 1 to 3, wherein the first capacitive element (Cap1) has a predetermined capacitance C1 so as to comply with a conversion factor of the selected pixel.

5. The pixel according to any one of the preceding claims, wherein the photoelectric effect element (EPE) is a pinned photodiode (D1).

6. The pixel according to any one of the preceding claims, wherein the output of the first amplifier (A1) is connected to the output of the amplification stage (AMP).

7. The pixel according to claim 6, wherein the first amplifier (A1) is a PMOS or NMOS transistor with a fine oxide grid which is mounted as a common drain.

8. The pixel according to claim 6, wherein the first amplifier (A1) is a native transistor which is mounted as a common drain.

9. The pixel according to any one of claims 1 to 5, wherein the amplification stage (AMP) comprises:

a sampling stage comprising
a sampling commutator (T4) for sampling the output signal of the first amplifier (A1), and a sampling capacitive element (CSH) for storing the sampled signal,
a second amplifier (A2) having an input which is connected to the output of the sampling stage and having an output which is connected to the output of the amplification stage (AMP).

10. The pixel according to claim 9, comprising

a commutator (T3) which is connected between the output of the first amplifier (A1) and a third selected supply voltage (VPC),
the first amplifier (A1) being formed by a PMOS transistor which is mounted as a common drain (P7) and which is polarised via the commutator (T3),
the second amplifier (A2) being formed by a PMOS transistor with a fine oxide grid mounted as a common drain (P8).

11. The pixel according to claim 9, wherein

the first amplifier (A1) is formed by a first NMOS transistor which is mounted as a common drain (N7) and which is polarised via a commutator (T3) which is connected between the source of the transistor (N7) and the electrical earth,
the second amplifier (A2) is formed by a second NMOS transistor with a fine oxide grid mounted as a common drain (N8).

12. The pixel according to claim 9, wherein

the first amplifier (A1) is formed by a first native transistor which is mounted as a common drain (N7) and which is polarised via a commutator (T3) which is connected between the source of the transistor (N7) and the electrical earth,
the second amplifier (A2) is formed by a second native transistor which is mounted as a common drain (N8).

13. An image sensor comprising

a matrix of pixels (B1), in which at least one pixel is constructed according to any one of the preceding claims,
a circuit for generating control signals of the pixels (B2),
a sampling circuit (B3) which is arranged at the base of each column of the matrix of pixels which is connected to the output of the row selection commutator (T5) of each pixel of the corresponding column,
a power supply circuit (B4) for supplying electrical power to each column of the matrix of pixels.

14. The image sensor according to claim 13, wherein the sampling circuit (B3) is a correlated double-sampling circuit.

[Fig. 1]

**Fig.1**

[Fig. 2]

**Fig.2**

[Fig. 3]

**Fig.3**

[Fig. 4]

**Fig.4**

[Fig. 5a]

**Fig.5a**

[Fig. 5b]

**Fig.5b**

[Fig. 6]

**Fig.6**

[Fig. 7a]

**Fig.7a**

[Fig. 7b]

**Fig.7b**

[Fig. 8]

Fig.8

[Fig. 9]

Fig.9

**EP 3 829 160 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20140239161 A
- EP 3324612 A
- EP 2966687 A
- US 2019238768 A1

### Littérature non-brevet citée dans la description

- **LUNDBERG, KENT H.** *Noise Sources in Bulk CMOS*